# EUROPEAN PATENT SPECIFICATION

(11) **EP 3 064 542 B1**
(45) Date of publication and mention of the grant of the patent: **25.01.2017**
(21) Application number: 15460007.6
(22) Date of filing: 04.03.2015
(51) Int. Cl.: C08L 3/02, C08L 67/04, C08J 5/00

(54) **BIODEGRADABLE THERMOPLASTIC POLYMER COMPOSTION, METHOD FOR ITS MANUFACTURE AND USE THEREOF**
BIOLOGISCH ABBAUBARE, THERMOPLASTISCHE POLYMERZUSAMMENSETZUNG, VERFAHREN DEREN HERSTELLUNG UND VERWENDUNG DAVON
COMPOSITION DE POLYMÈRE THERMOPLASTIQUE BIODÉGRADABLE, PROCÉDÉ POUR SA FABRICATION ET SON UTILISATION

(43) Date of publication of application: 07.09.2016
(73) Proprietor: Politechnika Gdanska, 80-233 Gdansk (PL)
(72) Inventor: Kucinska-Lipka, Justyna, 80-177 Gdansk (PL); Sienkiewicz, Maciej, 80-034 Gdansk (PL); Janik, Helena, 80-287 Gdansk (PL); Stelmasik, Andrzej, 81-075 Gdynia (PL); Bozek, Katarzyna, 82-300 Elblag (PL); Lachowicz, Aneta, 14-400 Paslek (PL)
(74) Representative: Rzazewska, Dorota

(56) References cited:
- WO-A1-97/03121
- WO-A1-2007/012142
- WO-A1-2010/051589
- CN-A- 101 955 639

## Description

The object of the invention is a biodegradable thermoplastic polymer composition, method for its manufacture and use thereof for manufacturing disposable items.

### Prior art

Conventional plastic packages are post-consumer wastes which are difficult for disposal and constitute a burden to the environment, due to their large volume and inability to biodegrade or to compost [1-3]. Due to the current environmental requirements, in the mid-90s of the twentieth century, innovative technologies for obtaining polymer materials from renewable raw materials, and also technologies/biotechnologies leading to the manufacture of biodegradable or compostable plastics started to be implemented [4]. Rising prices of petroleum-derived plastics, a growing interest in raw materials derived from renewable sources and significantly improving properties of biodegradable polymers contribute to this approach for obtaining new generation synthetic materials and also contribute to better conditions for their development [5-6].

Potato starch (C₆H₁₀O₅)n (n>300), commonly known as potato flour, is a polysaccharide produced by some plants which accumulate it in special storage tissues present in roots, rhizomes, tubers and seeds. Starch obtained from potato, corn, wheat and rice is of industrial importance [7-12]. Starch may be used to modify many polymers in the form of thermoplastic starch (TPS). TPS [8-12] is biodegradable, can be manufactured by means of conventional technologies (extrusion, thermoforming, high pressure injection) which are used for the manufacture of the first generation, non-biodegradable, synthetic polymers, such as polyethylene, polypropylene or polystyrene. The key factors that are responsible for the demand for biodegradable polymers are the capacity of municipal waste landfills being run out, the dependence on gaseous and fossil fuels and the increasing need to inhibit greenhouse gas emissions.

TPS can be used to solve the problem of the so-called first-generation polymer waste, by introducing it in a suitable proportion into other polymers, which leads to materials that are more susceptible to organic recycling.

In order to obtain thermoplastic starch, the crystalline nature of the native starch grains should be destroyed through its thermal and mechanical processing.

In the prior art, various methods for starch modification which lead to obtaining the thermoplastic starch are disclosed. For example, according to patent specification US 6136097, the thermoplastic starch is obtained from a native starch and a plasticizer, which is glycerine, and an emulsifier in the form of glycerine monostearate.

In turn, in patent specification WO 0248198, a process of destructuration of native starch by means of water, and/or polyfunctional alcohols or low molecular weight compounds, such as ethylene or propylene glycol or dimethylformamide, was used. A method for manufacturing a thermoplastic starch at a temperature of 65-120°C using an extruder was developed with the use of the said compounds. The resulting thermoplastic starch retains its dimensional stability and is intended for manufacturing details by injection moulding and blow moulding.

International patent application WO 9005161 discloses that in the preparation of the thermoplastic starch, melting point of native starch can be lowered by adding compounds such as dimethylsulfoxide, 1,3-butanediol, formamide, glycerine, ethylene or propylene glycol, and dimethylformamide in an amount greater than 5 wt%, to native starch during its processing in the extruder.

According to patent specification US 6472497, destructuration of native starch can be performed against hydrophobic polymers acting as a plasticizer added in an amount of 10-40 wt%, preferably from the group of aliphatic polyesters, polyesterurethanes, polyesteramides, copolyesters with aliphatic and aromatic blocks, or mixtures thereof.

A method for obtaining a thermoplastic potato or corn starch, is also known, as described in patent PL 216930 (B1), according to which in a first step, native starch is mixed with glycerine and is transformed into a dry mixture with simultaneous draining of water at a temperature of 60-100°C, and in a second step, the dry mixture is conditioned and transformed into a plasticized state at a temperature of 130-150°C, and then extruded at a temperature of 150-180°C with simultaneous degassing of volatile matter, and granulated.

A method for obtaining starch products with significantly improved mechanical properties using the process of reactive processing of polymer compositions is also described in the literature. In a first step, native corn starch, glycerol, water and triethylamine are mixed for 45 minutes in order to obtain a homogeneous mass having a substantial viscosity. In a second step, water is completely evaporated, and then epoxidized soybean oil is added in an amount of up to 4 wt%, which leads to the formation of covalent crosslinks between the starch, plasticizer and epoxidized soybean oil [9]. Triethylamine is added in order to open the oxirane ring of epoxidized oil, which contributes to the initiation of chemical reactions between the components of the mixture.

The main problem in the use of starch in polymer compositions is its insufficient miscibility with synthetic polymers, including polylactide.

PLA polymer is a new-generation thermoplastic polymer material obtained from renewable raw materials, capable of composting (organic recycling, i.e. degrading in specially prepared composting facilities, at an elevated temperature), derived mainly from annually renewable resources of vegetable origin. It is an aliphatic polyester manufactured e.g. from raw materials containing corn starch, which makes its manufacturing independent from petroleum. PLA polymer is specifically designed for use in the processes of extrusion, thermoforming, injection, therefore it is easily processed in conventional machines for extrusion and thermoforming and is now manufactured on a large industrial scale. The main property of PLA, which distinguishes it from conventional petroleum-derived polymers, is its biodegradability under industrial composting conditions [12-13]. PLA has good mechanical properties used in the packaging industry (e.g. for beverage bottles). It has a high flavour and aroma barrier [13], therefore it can be used for packaging dry products and products with a short best before date. PLA granulate is hygroscopic, which is important when considering the technological process. However, the films made from PLA are not as hygroscopic as the granulate. PLA films are stable under typical conditions of use and storage. These films are characterised by resistance to UV radiation, which is better in comparison with aromatic polymers, such as PET. PLA is a material of high polarity, has a high critical surface energy and therefore it is easily dyed, metallised and printed (it is possible to use natural pigments). PLA is mixed with other natural and synthetic polymers, including thermoplastic starch, in order to modify properties, such as undesirable brittleness, water absorption, and in order to reduce the price of products, and also to obtain products with different times of degradation under specific conditions of use or recycling.

The disadvantage of the described methods for manufacturing starch compositions, leading to the thermoplastic starch which can then be used to obtain starch-polylactide compositions, is the use of water, as a plasticizer, which poses a risk of obtaining a starch which is plasticized but rapidly undergoes the process of recrystallization. The use of water only also leads to the material which is very brittle at room temperature. A technical disadvantage is also the method of starch plasticization, wherein in a first step, after addition of glycerol as a plasticizer, it is necessary to drain excessive water or to evaporate it. The use of emulsifiers in the process of manufacturing thermoplastic starch adversely affects the mechanical properties of the resulting product. In turn, the introduction of hydrophobic biodegradable polymers, supporting or acting as a plasticizer, to the native starch, leads to a product which is unstable during storage and use due to differences in polarity of starch and hydrophobic polymers from the group of aliphatic polyesters, polyester urethanes, polyester amides, copolyesters with aliphatic and aromatic blocks, or mixtures thereof, leading to phase separation due to limited miscibility of these components and to the need to use compatibilizers. The use of reactive processing of starch against epoxidized soybean oil and triethylamine significantly improves the mechanical properties of the resulting starch product but contributes to a very substantial increase in melt viscosity and significant difficulties in the processing of starch, and also of postconsumer starch products obtained in this manner, when subjected to material recycling.

In international patent application WO 9703121, polymer compositions containing starch or starch-derived components, and in particular those enriched in amylose, also containing biodegradable aliphatic polyesters, including polylactide and biodegradable fibrous material (cellulose pulp) with very good mechanical properties and very good resistance to water, are described. A disadvantage of this solution can be a disorder in the microstructure of the composition and its difficult processing because the fibrous cellulose, in itself, is difficult to process and has a tendency to aggregate.

Patent PL 207301B1 discloses a method for manufacturing a biodegradable composition containing thermoplastic starch and at least two traditional petroleum-derived thermoplastic polymers (polyolefins, vinyl polymers, polyesters, polyurethanes), at least one of which exhibits compatibilizing properties in relation to the starch, and it is believed that such compatibilizers can be ethylene acrylic acid copolymer, polyethylene grafted with maleic anhydride, synthetic polycaprolactone, copolymer of isophorone diisocyanate and polyethylene glycol, polyvinyl chloride softened with a mixture of epoxidized soybean oil and alkyl ester of citric acid, and in particular butyl and octyl citrate. By virtue of definition of polymer biodegradability, these compositions can be considered as partially biodegradable because many of the proposed petroleum-derived thermoplastic polymers do not decompose to carbon dioxide and water, i.e. to the products which are required to meet the biodegradability criteria. Furthermore, a disadvantage of the proposed composition of the invention is its complexity and difficult processing requiring to further use, in addition to compatibilizers, supportive agents in the form of lubricants (preferably oleic acid amide, magnesium stearate, zinc stearate, calcium stearate), which is not preferred from both the processing and economical perspectives.

Patent PL 214329B1 describes biodegradable polymer compositions containing thermoplastic potato or corn starch (starch plasticized preferably with glycerine) and a mixture of polylactide and polylactide grafted with maleic anhydride, and compatibilising components (preferably gluten). The compositions described in the invention, through the use of polylactide grafted with maleic anhydride and compatibilizing additives (gluten) for their preparation, are characterized by a preferable set of strength properties, good flexibility and impact resistance, which is difficult to achieve in this type of compositions. Furthermore, the compositions obtained by the method according to the invention are characterized by high biodegradability and homogeneity of their structure, dimensional stability under conditions of use, and as well as at an elevated temperature and under high humidity conditions. With the composition, according to the authors of the invention, articles may be prepared by injection moulding, extrusion and transfer moulding, the articles being intended for elements of household and catering appliances, and office requisites. A disadvantage of the described solution is the use of gluten, as an auxiliary (compatibilizing) agent which, as a protein, can be partially decomposed [14] under the temperature conditions of the process for obtaining the compositions described in the invention.

In the specification of the solution according to patent PL 217738B1, possibilities of modifying the properties of PLA or a composition containing PLA, such as modulus of elasticity, glass transition temperature and plasticity, by plasticizing PLA with oligomers and polymers of propylene glycol and propylene oxide, are presented. A disadvantage of this solution is the introduction of petroleum-derived raw materials, which are less ecological than renewable raw materials, to PLA composition. Furthermore, a disadvantage is the undesirable tendency to increase the water absorption by this composition.

Patent US 5312850 discloses a polylactide-starch composition with the addition of a stabilizer and a plasticizer for obtaining a hot-melt adhesive.

In the literature [15], modifications of the properties (in particular impact resistance) of starch-polylactide mixtures by replacing the commercial PLA with polylactide grafted with maleic anhydride (PLA-g-MA) and by compatibilization of PLA-g-MA and TPS (thermoplastic starch) with the use of copolymer of terephthalate and butylene adipate, are described. PLA grafting through such compounds requires special precautions due to the possibility of bums or irritation of mucous membranes, allergies and other undesirable symptoms resulting from the chemical nature of the components used. Furthermore, such procedure is not suitable for industrial implementation for economic reasons.

The aim of the invention is to provide a polymer composition which will consist of raw materials of natural origin, will be stable during storage, and articles manufactured therefrom will be fully biodegradable while maintaining the desirable physical and mechanical properties.

### Invention

Abbreviations as used herein have the following meanings:
PLA represents polylactide, mTPS represents modified thermoplastic starch, AG represents agar, EOR represents epoxidized vegetable oil, preferably epoxidized soybean oil - EOS, and GA represents arabic gum, wherein all components are of natural origin, including vegetable origin, and some of them may come from renewable sources. As used herein, the term glycerine includes anhydrous glycerine used as a plasticizer.

The biodegradable thermoplastic polymer composition according to the invention consists of polylactide (PLA) and modified thermoplastic starch (mTPS) at a weight ratio mTPS to PLA of 7/1 to 1/7, respectively, wherein mTPS contains 30-80.8 wt% of native starch, 10-48.5% of glycerol as a plasticizer and additional modifying components in the form of 2-20 wt% of agar (AG) and/or 0.5-10 wt% of epoxidized vegetable oil (EOR), and/or 0.5 to 10 wt% of arabic gum (GA).

Preferably, the composition according to the invention is characterized in that it consists of polylactide (PLA) in the amount of 12.5% by weight and modified thermoplastic starch (mTPS) in the amount of 87.5% by weight, wherein mTPS contains 30-80.8 wt% of native starch, 10-48.5% of glycerol as a plasticizer and additional modifying components in the form of 2-20 wt% of agar (AG) and/or 0.5-10 wt% of epoxidized vegetable oil (EOR), and/or 0.5 to 10 wt% of arabic gum (GA).

Preferably, the composition according to the invention is characterized in that it consists of polylactide (PLA) in the amount of 87.5 % by weight and modified thermoplastic starch (mTPS) in the amount of 12.5% by weight, wherein mTPS contains 30-80.8 wt% of native starch, 10-48.5% of glycerol as a plasticizer and additional modifying components in the form of 2-20 wt% of agar (AG) and/or 0.5-10 wt% of epoxidized vegetable oil (EOR), and/or 0.5 to 10 wt% of arabic gum (GA).

Preferably, the composition according to the invention is characterized in that it consists of 12.5% by weight of polylactide (PLA) and 87.5% by weight of modified thermoplastic starch (mTPS), wherein the modified thermoplastic starch contains 73.1 wt% of native starch, 24.4 wt% of glycerol as a plasticizer and additional modifying components in the form of 0.5 wt% of epoxidized vegetable oil (EOR) and 2 wt% of arabic gum (GA).

Preferably, the composition according to the invention is characterised in that it consists of polylactide (PLA) and modified thermoplastic starch (mTPS) in the weight ratio of 1/2 or 1/3, respectively, where the modified thermoplastic starch contains 73.1 wt% of native starch, 24.4 wt% of glycerol as a plasticizer and additional modifying components in the form of 0.5 wt% of epoxidized vegetable oil (EOR) and 2 wt% of arabic gum (GA).

Preferably, the composition according to the invention is characterized in that it consists of polylactide (PLA) and modified thermoplastic starch (mTPS) in the weight ratio of 1/2, 1/3 or 1/4, respectively, where the modified thermoplastic starch contains 73.5 wt% of native starch, 24.5 wt% of glycerol as a plasticizer and additional modifying components in the form of 2 wt% of arabic gum (GA).

The compositions according to the invention contain a compostable polymer in the form of polylactide (PLA), a biodegradable macromolecular compound of natural origin, which is starch, as well as glycerol of vegetable origin and additives constituting components derived from renewable sources in the form of agar and/or epoxidized soybean oil and/or arabic gum. In particular, the object of the invention is an environmentally friendly polymer composition which constitutes an alternative to conventional polymers which are not subject to degradation directly in the environment or to composting process. They also constitute a new material alternative for the manufacture of disposable articles or packaging materials, these materials in most cases being mass-produced from conventional, non-biodegradable and non-compostable polymers.

Products (disposable articles or packaging materials) made from the polymer composition according to the invention undergo biodegradation in a composting process (organic recycling) or disintegration in the natural environment, and then biodegradation at different times depending on the composition of the composition. These products are therefore easier for disposal than traditional packaging, films or postconsumer waste obtained from petroleum-derived materials, such as polyethylene (PE), polypropylene (PP), polyethylene terephthalate (PET). The material of the polymer composition according to the invention belongs to the group of bioplastics. The use of bioplastics also contributes to the reduction of workload in many industries, e.g.: in agrotechnology, biodegradable films for mulching shorten the time to prepare ground for plant vegetation, and in medicine, biodegradable surgical sutures contribute to the reduction of ambulatory load by patients.

The polymer composition according to the invention contains potato starch in powdered form, polylactide as a colourless commercial granulate, anhydrous glycerine - used as a plasticizer of starch and additives which modify processing properties, as well as physical and mechanical properties of the composition. These additives are agar-agar and/or epoxidized soybean oil, and/or arabic gum and are introduced into the composition at the stage of obtaining the thermoplastic starch. The use of polylactide (PLA) in the composition according to the invention has a significant effect on maintaining its high mechanical strength, while starch modified with natural compounds (mTPS) is intended to improve the processing parameters, flexibility, performance characteristics and to accelerate the biodegradability of mTPS/PLA composition.

Since the melting point of the dry native starch is much higher than the temperature of its decomposition, therefore, the addition of a plasticizer in the form of anhydrous glycerine during the processing of starch reduces the strength of intermolecular interactions in the native starch, which contributes to the greater mobility of starch chains, and at the same time, water is not introduced as it could cause deterioration of physical and mechanical properties of articles made from this type of material.

The compositions and proportions of the polymer compositions according to the invention and the choice of the modifying additive are selected in a manner that ensures obtaining a granulate having a desired processability and physical and mechanical properties of products (disposable products or packaging materials) made from the polymer composition according to the invention.

The introduction of a modifying additive, which is agar (C₁₂H₁₈O₉)n [16], into the composition according to the invention leads to thermoreversible hydrogen bonds [17-19] due to the strong intermolecular interaction of starch, agar and polylactide. Agar is a hydrophilic, colloidal polysaccharide consisting mainly of alternating L and D isomers of galactose units. Agar is a renewable raw material. It is obtained from seaweed *Gelidium amansi.* Annual world production is several million tons and is constantly increasing [16, 22-23]. The test results for the properties of agar, presented in the literature, indicate that agar is compatible with starch [18] and has advantageous characteristics, such as high resistance to permeability of water molecules [20] (so-called WVP-water vapour permeability) and this property can be used to improve characteristics of the products which are based on starch and exhibit a strong tendency to change strength characteristics of products in an environment of high humidity [20]. The addition of agar also prevents retrogradation of the starch [17], and in combination with PLA, it preferably modifies the degradation time of PLA in a particular environment of the product obtained from the composition according to the invention with the addition of agar. Polymer films from PLA and agar are thermally stable and are suitable for welding [21]. Agar in the form of gel is known in food, pharmaceutical, analytical (chromatography, electrophoresis, microbiology) and medical applications. Agar gels have a high modulus of elasticity at a low content in a mixture with water. However, the use of agar in the modification of polymer granulates from polylactide, intended for processing applicable to thermoplastics, in order to obtain packaging films and disposable products, is not known. Since the time of disintegration of articles made from the composition according to the invention with the addition of agar as a modifying additive is reduced with an increase in amounts of agar and starch in the composition, the so-modified composition according to the invention can be used for the manufacture of, for example, films. Due to the fact that the density of the composition according to the invention with the addition of agar as a modifying additive is higher than the density of water, film made from such a composition will not float on the water surface and will not endanger birds and marine animals which prey in water reservoirs. Moreover, for example, the total time of disintegration in water for the film made from the composition according to the invention with the addition of agar as a modifying additive is about 7-45 days, and therefore articles made from this composition are very friendly to the environment, especially to the aquatic environment.

The thermoplastic compositions according to the invention with the addition of agar as a modifying additive are dedicated to forming utility products by transfer moulding.

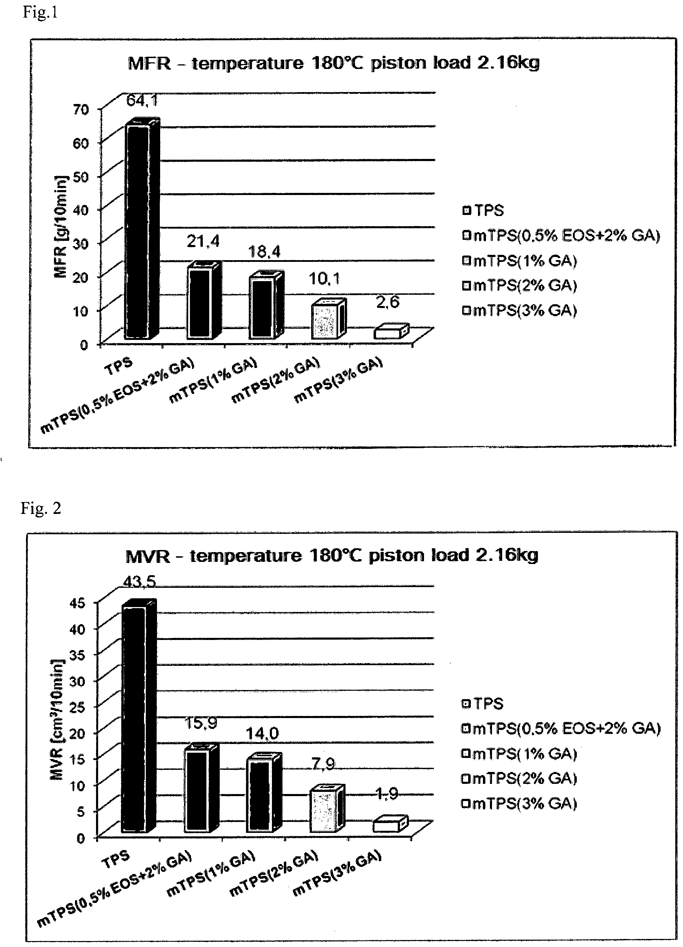

In turn, the introduction of epoxidized vegetable oils (EOR), preferably epoxidized soybean oil - EOS, as an additive modifying TPS, to the compositions according to the invention, allows improving the compatibility of TPS with PLA, which in turn improves the processing indexes of the compositions according to the invention, among others by increasing the melt flow index of mTPS and mTPS/PLA composition, as well as improves mechanical properties of the compositions according to the invention (among others, increase in the elongation at a breaking point of mTPS/PLA composition). Improvement in the compatibility of mTPS/PLA composition and in its processing and mechanical properties occurs as a result of formation of strong intermolecular interactions between TPS and PLA via hydrogen bonds, formed between EOR epoxy groups and hydroxyl groups present in the structure of PLA and TPS (Fig. 1 and Fig. 2).

On the other hand, the introduction of the modifying additive, which is arabic gum (GA), being a natural thickening and emulsifying compound, to the compositions according to the invention, prevents flocculation and coalescence of epoxidized vegetable oils used in the modification of mTPS, which ensures the consistency and uniformity of mTPS/PLA composition. Furthermore, the use of GA in the composition allows adjusting (reducing) the values of melt flow indexes of mTPS/PLA composition, which could be excessively increased due to the increase in the content of the epoxidized vegetable oil (EOR) in the composition, moreover the addition of GA allows increasing the flexibility of the compositions according to the invention (Fig.1 and Fig. 2). Arabic gum also leads to formation of a durable coating on the surface of mTPS/PLA composition, which provides a high barrier capacity for oxidation processes of its components and improvement of adhesion of the composition to overprints, without disturbing its glossiness.

Another object of the invention is a method for obtaining the thermoplastic polymer composition consisting of polylactide (PLA) and modified thermoplastic starch (mTPS) at a weight ratio mTPS to PLA of 7/1 to 1/7, respectively, wherein mTPS contains 30-80.8 wt% of native starch, 10-48.5% of glycerol as a plasticizer and additional modifying components in the form of 2-20 wt% of agar (AG) and/or 0.5-10 wt% of epoxidized vegetable oil (EOR) and/or 0.5 to 10 wt% of arabic gum (GA), characterized in that it consists of three steps, where:
a) in a first step, native starch is mixed at room temperature, using a mechanical mixer with a plasticizer in the form of glycerol and an additional modifying component selected from the group consisting of agar-agar (AG), epoxidized vegetable oil (EOR) or arabic gum (GA), and the resulting mixture is subjected to conditioning in closed vessels for a period of 6-24 hours;
b) in a second step, the mixture from step a) is subjected to extrusion using a single-screw or twin-screw extruder, while maintaining the head temperature in the range of 120-210°C and the temperature of the heating zones of the plasticising unit in the range of 100°C to 210°C, with simultaneous degassing of volatile matter, and then the thermoplastic extrudate is cooled with air to room temperature and is subjected to granulation, thus obtaining a modified thermoplastic starch (mTPS) granulate with a diameter of approx. 1 mm;
c) in a third step, the granulate obtained in step b) is mixed with polylactide (PLA) granulate, wherein the weight ratio of mTPS to PLA is 7/1 to 1/7, respectively, and then the resulting mTPS/PLA mixture is subjected to extrusion using a single-screw or twin-screw extruder, while maintaining the head temperature in the range of 130-210°C and the temperature of the heating zones of the plasticizing unit in the range of 100°C to 260°C, with simultaneous degassing of volatile matter, and then the thermoplastic extrudate is cooled with air to room temperature and is subjected to granulation, thus obtaining a granulate (mTPS/PLA) with a diameter of approx. 1 mm.

The method according to the invention is characterized in that the granulate of the biodegradable thermoplastic polymer composition, obtained in step c), can be formed into various shapes depending on the needs.

The composition according to the invention is manufactured in three steps. In the first step, a starch mixture consisting of native starch, plasticizer and TPS modifier in the form of agar and/or epoxidized vegetable oil (preferably epoxidized soybean oil), and/or arabic gum, is prepared.

In the second step, the mixture from step a) is introduced into the charging hopper of a single-screw or twin-screw extruder, and is subjected to thermomechanical transformations under the influence of extrusion of the mixture, at the temperatures of the heating zones of the extruder in the range of 100°C to 210°C, preferably 110-180°C, at a rotation speed of the screw preferably of 10-100 min⁻¹, with simultaneous degassing of volatile matter released during extrusion, and granulation of the resulting mTPS extrudate, using a knife granulator. The process of extrusion of the starch mixture is preferably carried out in a co-rotating twin-screw extruder, equipped with continuously adjustable control of the rotational speed of the screws and appropriate controllers and sensors necessary for properly conducting and monitoring the extrusion process.

According to the invention, the modified thermoplastic starch (mTPS) granulate is subjected in the last, third step to mixing with polylactide (PLA) granulate at a weight ratio of mTPS/PLA, without additional components supporting miscibility, in the range of 7/1 to 1/7, and subjected to extrusion using a single-screw or twin-screw extruder. In this process, plasticization and complete homogenisation of mTPS/PLA composition take place, while maintaining the temperature of the heating zones of the plasticizing system and the head of the extruder in the range of 133-210°C, preferably of 140-200°C, and the rotation speed of the screws preferably at 10 min⁻¹ to 100 min⁻¹.

The resulting extrudate is subjected to granulation, with the use of a knife granulator, and the resulting mTPS/PLA granulate is placed in airtight containers in order to protect it against humidity.

In a preferred variant of the method for obtaining the mTPS/PLA composition, PLA granulate is introduced to V-IV plasticizing zone of the extruder, directly to mTPS melt, whereby it is possible to extrude mTPS/PLA composition according to the invention in a continuous manner.

With the method according to the invention, homogeneous thermoplastic mTPS/PLA composition uniform throughout its volume and with varying degrees of transparency depending on the composition of the composition is obtained. The mTPS/PLA compositions obtained by the above method according to the invention are 100% compostable according to standard PN-EN 14806:2010, which has been confirmed in tests conducted by COBRO-Packaging Research Institute, Warsaw.

mTPS/PLA thermoplastic compositions, obtained by the method according to the invention, can be processed with methods and equipment commonly used in the processing of conventional thermoplastics. Compositions containing, in their content, the thermoplastic starch (mTPS) modified with agar are dedicated to forming utility products by transfer moulding. In contrast, compositions containing, in their content, thermoplastic starch (mTPS) modified by means of epoxidized vegetable oil and/or arabic gum are intended for the manufacture of extruded, injection moulded or pressed (with transfer method) articles of everyday use. All types of compositions obtained by the method according to the invention can be used in the manufacture of e.g. disposable dishes and cutlery, dividers for creams, cosmetic sticks, inserts for nail files, flat films or other types of disposable polymer materials, manufactured so far from thermoplastics, and after use, they can be subjected to composting and biodegradation.

The method for obtaining the polymer compositions according to the invention is simple, accessible and uses readily available components of natural origin or from renewable raw materials.

After preparation, in the first step, of the mixture for the manufacture of modified thermoplastic starch, in the second step modified thermoplastic starch (mTPS) granulate is manufactured by thermomechanical plasticising and mixing, while in the third step mTPS and PLA granulates are mixed in the extrusion process, whereby the polymer composition, homogeneous on a macro scale, according to the invention with good processing and physicochemical properties is obtained.

The invention is explained in detail in embodiments that do not limit its scope.

### DRAWINGS

The invention is illustrated in the drawing, where
[Fig. 1] shows the influence of the addition of modifying substance (GA and EOS) on the processing properties of modified thermoplastic starch (mTPS) obtained according to the invention, i.e. melt mass-flow index (MFI, 180°C, 2,16kg) [g/10min] for mTPS from Examples 1 and 2;
[Fig. 2] shows the influence of the addition of modifying substance (GA and EOS) on the processing properties of modified thermoplastic starch (mTPS) obtained according to the invention, i.e. melt volume-flow index (VFI, 180°C, 2,16kg) [cm³/10min] for mTPS from Examples 1 and 2;
[Fig. 3] shows photographs documenting the disintegration of the film prepared from the composition of Example 3, where a granulate of starch, glycerol, agar and PLA at a weight ratio of mTPS (Agar )/PLA/ =3:1 was processed by transfer moulding, and the so-obtained film was subjected to 7 days of incubation in seawater. Macroscopic observation indicates that after 7 days, the film was completely disintegrated.

### EXAMPLE 1

Thermoplastic mTPS/PLA composition is obtained in a three-step process using polylactide (PLA 2003D - Ingeo Biopolymer) and thermoplastic starch (mTPS) containing, potato starch ("ZPZ" Pi 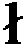 a) and glycerol of vegetable origin (purity of 99.5%, techlanLab Tarnobrzeg), which was modified by the addition of epoxidized soybean oil (Brenntag) and an aqueous solution of arabic gum (Talens Arabic gum).
In a first step, at room temperature, in Z-mixer, at the speed of the rotors of 80-100 RPM, a starch mixture consisting of 73.1 wt% of potato starch, 24.4 wt% of glycerol and the addition of epoxidized soybean oil in the amount of 0.5 wt%, and arabic gum in the amount of 2 wt%, was prepared. After stirring all the components, the mixture was conditioned for 24 hours at room temperature, the aim of which was to achieve complete swelling of the starch by means of glycerol, oil, and an aqueous solution of arabic gum.

In a second step, the resulting dry starch mixture, after conditioning, was introduced into the charging hopper of a co-rotating twin-screw extruder and was extruded at the rotational speed of the screws of 65 RPM, while maintaining a constant temperature in 9 heating zones of the plasticizing unit of the extruder, the distribution of which was as follows 110°C /150°C/ 165°C/ 170°C /170°C/ 170°C/ 170°C /165°C/ 165°C/ and a constant temperature of the extruder head and connector at the level of 165°C. During the extrusion of the starch mixture in a continuous manner, gaseous products formed in this process were evacuated from the 4th and 5th plasticizing zone of the extruder. After leaving the extrusion head, the thermoplastic extrudate was cooled with air and granulated on a knife granulator into the form of granulate with a diameter of approx. 1 mm.

In a third step, the resulting modified thermoplastic starch (mTPS) granulate was mixed with a commercial polylactide granulate (PLA-2003D Ingeo Biopolymer), while maintaining the weight ratio of mTPS/PLA in the range of 1/7 to 7/1, and was subjected to extrusion using a co-rotating twin-screw extruder. During this process, mTPS/PLA composition was plasticised and completely homogenized. The mTPS/PLA mixture was extruded at the rotational speed of the screws of 20 RPM, while maintaining a constant temperature in 9 heating zones of the plasticizing system of the extruder, the distribution of which was as follows 110°C /150°C/ 165°C/ 170°C /170°C/ 175°C/ 175°C /170°C/ and a constant temperature of the extruder head and connector at the level of 170°C. After leaving the extrusion head, the thermoplastic mTPS/PLA composition was cooled with air and granulated with the use of a knife granulator into the form of granulate with a diameter of approx. 1 mm.

In Table 1 and Fig. 1 and 2, processing properties of the mTPS/PLA composition obtained according to Example 1, are presented.

The mTPS/PLA compositions obtained by the above method are 100% compostable according to standard PN-EN 14806:2010, which has been confirmed in tests conducted by COBRO-Packaging Research Institute, Warsaw.

From the mTPS/PLA compositions, obtained by the above method, disposable cutlery, cosmetic sticks, disposable inserts for nail files, or other disposable polymer materials, manufactured so far from thermoplastics, can be manufactured.

### EXAMPLE 2

The thermoplastic mTPS/PLA composition is obtained in a three-step process using polylactide (PLA 2003D - Ingeo Biopolymer) and thermoplastic starch (mTPS) containing, in its content, potato starch ("ZPZ" Pila) and glycerol of vegetable origin (purity of 99.5%, techlanLab Tarnobrzeg), which was modified by the addition of an aqueous solution of arabic gum (Talens Arabic gum).

In a first step, at room temperature, in Z-mixer, at the speed of the rotors of 80-100 RPM, a starch mixture consisting, in its content, potato starch in the amount of 73.5 wt%, glycerol used in the amount of 24.5 wt% of and an aqueous solution of arabic gum used in the amount of 2 wt%, was prepared. After stirring all the components, the resulting mixtures were conditioned for 24 hours at room temperature, the aim of which was to achieve complete swelling of the starch by means of glycerol and an aqueous solution of arabic gum.

In a second step, the resulting starch mixture, after conditioning, was introduced into the charging hopper of a co-rotating twin-screw extruder and was extruded at the rotational speed of the screws of 65 RPM, while maintaining a constant temperature in 9 heating zones of the plasticizing system of the extruder, the distribution of which was as follows 110°C /150°C/ 165°C/ 170°C /170°C/ 170°C/ 170°C /165°C/ 165°C/ and a constant temperature of the extruder head and connector at the level of 165°C. During the extrusion of the starch mixture in a continuous manner, the thermoplastic mass being formed was degassed by evacuating gaseous products formed in this process from the 4th and 5th plasticising zone of the extruder. After leaving the extrusion head, the thermoplastic extrudate was cooled with air and granulated on a knife granulator into the form of granulate with a diameter of approx. 1 mm. The modified thermoplastic starch (*mTPS) granulate, obtained in the extrusion process, was subjected, in the last step, to mixing with a commercial polylactide granulate (PLA), while maintaining the weight ratio of mTPS/PLA of 1/7 to 7/1, respectively, and was subjected to extrusion with the use of a co-rotating twin-screw extruder, whereby the mTPS/PLA composition was plasticised and completely homogenized.

The mTPS/PLA mixture was extruded at the rotational speed of the screws of 20 RPM, while maintaining a constant temperature in 9 heating zones of the plasticizing system of the extruder, the distribution of which was as follows 110°C /150°C/ 165°C/ 170°C /170°C/ 175°C/ 170°C /170°C/ and a constant temperature of the extruder head and connector at the level of 170°C. After leaving the extrusion head, the thermoplastic mTPS/PLA composition was cooled with air and granulated with the use of a knife granulator into the form of granulate with a diameter of approx. 1 mm. In Table 1 and in Fig. 1 and 2, processing properties of the mTPS/PLA composition obtained in Example 1, are presented.

The mTPS/PLA compositions obtained by the above method are 100% compostable according to standard PN-EN 14806:2010, which has been confirmed in tests conducted by COBRO-Packaging Research Institute, Warsaw. From the mTPS/PLA composition, obtained by the above method, e.g. disposable cutlery, cosmetic sticks, disposable insert for nail files, or other disposable polymer materials, manufactured so far from thermoplastics, can be manufactured.

The results obtained for the composition according to the invention were compared with processing properties of components in the form of a PLA and mTPS.

**Table 1 Processing properties of the thermoplastic compositions made from PLA and thermoplastic starch (mTPS) modified by means of epoxidized oil (EOS) and/or an aqueous solution of arabic gum (GA).**

| **Type of material** | **Weight ratio of mTPS/PLA** | | **Composition of mTPS [wt%]** | | | | **Melt mass-flow index (MFI, 180°C, 2.16kg) [g/10min]** | **Melt volume-flow index (VFI, 180°C, 2.16kg) [cm³/10min]** |
|---|---|---|---|---|---|---|---|---|
| | mTPS | PLA | Starch | Glycerol | EOS | GA | | |
| Composition Example 1 | 7 | 1 | 73.1 | 24.4 | 0.5 | 2 | 13.0 | 10.5 |
| Composition Example 1 | 1 | 2 | 73.1 | 24.4 | 0.5 | 2 | 13.5 | 12.2 |
| Composition Example 1 | 1 | 3 | 73.1 | 24.4 | 0.5 | 2 | 14.7 | 12.6 |
| Composition Example 1 | 1 | 7 | 73.1 | 24.4 | 0.5 | 2 | 8.4 | 6.5 |
| Composition Example 2 | 7 | 1 | 73.5 | 24.5 | - | 2 | 19.9 | 14.8 |
| Composition Example 2 | 1 | 2 | 73.5 | 24.5 | - | 2 | 5.7 | 4.8 |
| Composition Example 2 | 1 | 3 | 73.5 | 24.5 | - | 2 | 5.8 | 4.9 |
| Composition Example 2 | 1 | 4 | 73.5 | 24.5 | - | 2 | 7.4 | 6.6 |
| Composition Example 2 | 1 | 7 | 73.5 | 24.5 | - | 2 | 6.1 | 5.2 |
| TPS* | - | - | 75.0 | 25 | - | | 64.1 | 43.5 |
| PLA -2003D (Ingeo) | - | - | - | - | - | - | 7.2 (210°C) | 6.6 (210°C) |

| | | | | | | | | |
|---|---|---|---|---|---|---|---|---|
| * TPS: non-modified thermoplastic starch prepared from a starch mixture, containing, in its composition, potato starch used in the amount of 75 wt% and glycerol used in the amount of 25 wt%. | | | | | | | | |

### EXAMPLE 3

The thermoplastic mTPS/PLA composition is obtained in a three-step process using polylactide (PLA 2003D - Ingeo Biopolymer) and thermoplastic starch (mTPS) containing potato starch ("ZPZ" Pi 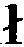 a) and glycerol of vegetable origin (purity of 99.5%, techlanLab Tarnobrzeg), which was modified by the addition of arabic gum (Difco, USA).

In a first step, at room temperature, in Z-mixer, at the speed of the rotors of 80-100 RPM, a starch mixture containing potato starch used in the amount of 44.4 wt%, glycerol used in the amount of 44.4 wt% mixed at a temperature of 60-80°C with agar used in the amount of 11.2%, was prepared. After stirring all the components, the resulting mixtures were conditioned for 24 hours at room temperature, the aim of which was to achieve complete swelling of the starch by means of glycerol.

In a second step, the resulting starch mixture, containing starch, glycerol and agar, after conditioning, was introduced into the charging hopper of a co-rotating twin-screw extruder and was extruded at the rotational speed of the screws of 65 RPM, while maintaining a constant temperature in 9 heating zones of the plasticizing system of the extruder, the distribution of which was as follows 110°C /150°C/ 165°C/ 170°C /170°C/ 170°C/ 170°C /165°C/ 165°C/ and a constant temperature of the extruder head and connector at the level of 165°C. During the extrusion of the starch mixture in a continuous manner, the thermoplastic mass being formed was degassed by evacuating gaseous products formed in this process from the 4th and 5th plasticizing zone of the extruder. After leaving the extrusion head, the thermoplastic extrudate was cooled with air to room temperature and granulated on a knife granulator into the form of granulate with a diameter of approx. 1 mm.

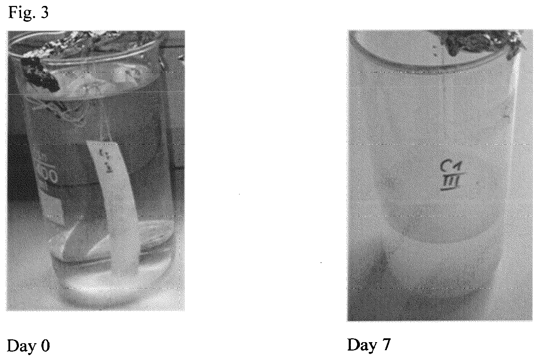

In the last step, the granulate of thermoplastic starch (mTPS) modified with agar, obtained by the process of extrusion, was mixed with a commercial polylactide granulate (PLA-2003D - Ingeo Biopolymer), while maintaining the weight ratio of mTPS/PLA of 1/7 to 7/1, respectively, and was subjected extrusion using a co-rotating twin-screw extruder. This process allowed plasticisation and complete homogenization of the mTPS/PLA composition. The mTPS/PLA mixture was extruded at the rotational speed of the screws of 20 RPM, while maintaining a constant temperature in 9 heating zones of the plasticising system of the extruder, the distribution of which was as follows 110°C /150°C/ 165°C/ 170°C /170°C/ 175°C/ 170°C /170°C/ and a constant temperature of the extruder head and connector at the level of 170°C. After leaving the extrusion head, the thermoplastic mTPS/PLA composition was cooled with air to room temperature and granulated with the use of a knife granulator into the form of granulate with a diameter of approx. 1 mm. From the so-prepared mixture, a granulate having softening temperature of 100°C, melting temperature of 160°C, degradation temperature >200°C, density of 1.15 g/cm³, determined at the temperature of 22 °C, was obtained. The complete disintegration of the polymer composition according to the invention in water, e.g. seawater, is 7 - 45 days (Fig. 3) and depends on proportions of the components used (Table 2). Disintegration time is reduced with the increase in the amounts of agar and starch in the composition. The resulting composition is friendly in particular to the fauna of the marine and oceanic environments in the case of using this material for packaging components since the density of the composition according to the invention is higher than the density of water, and therefore these components will not float on the water surface and will not be accidentally eaten by preying birds and marine animals. The thermoplastic compositions obtained by the method according to the invention, which contain agar, are dedicated to forming utility articles by transfer moulding..

**Table 2 Influence of the composition content according to Example 3 on the degree of degradation of the composition, expressed as the weight loss after 30 days of exposure in seawater.**

| **Type of composition** | **Weight ratio of mTPS/PLA** | | **Composition of mTPS [wt%]** | | | **Weight loss of the sample after 30 days of incubation in seawater [wt%]** |
|---|---|---|---|---|---|---|
| | mTPS | PLA | Starch | Glycerol | AG | |
| Composition Example 3 | 2.2 | 1.0 | 44.4 | 44.4 | 11.1 | 84 |
| Composition Example 3 | 1.3 | 1.0 | 26.3 | 52.3 | 21.4 | 56 |
| Composition Example 3 | 1.6 | 1.0 | 39.0 | 57.7 | 3.3 | 49 |

### References

[1] N. Czaja, Opakowania biodegradowalne szans 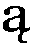 dla środowiska, Recykling 11/2004, 24-25.
[2]. M. R. Gregory, Environmental implications of plastic debris in marine settingsentanglement, ingestion, smothering, hangers-on, hitch-hiking and alien invasions, Phil. Trans. R. Soc. B 364/2009, 2013-2025
[3]. D. Zuchowska, R. Steller., W. Meissner, Kompozyty polimerowe podatne na (bio)degradacj 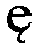 , Polimery 52/ 2007, 524-531.
[4]. L. Piecyk, Tworzywa sztuczne niedalekiej przys 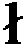 zości, Tworzywa sztuczne i chemia, 2/2008, 12-13.
[5]. R. Warczyński, Przysz 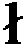 ość branży opakowaniowej, Opakowanie 1/2009, 23-26.
[6]. M. Kowalczuk, Polimery biodegradowalne : Perspektywy rozwoju w Polsce - za i przeciw, Recykling 4/2008, 16-17.
[7]. G. Tegge, Skrobia i jej pochodne, Polskie Towarzystwo Technologii Żywności, Oddzial Malopolski, Kraków 2010.
[8]. A. M. Nafchi, M. Moradpour, Thermoplastic starches: Properties, challenges and prospects, Starch 65/ 2013, 61-72.
[9] R. Belhassen, F. Vilaseca, P. Mutje, S. Boufi: Thermoplasticized starch modified by reactive blending with epoxidized soybean oil 2014, 58, 261-267.
[10]. A.J.F. Carvalho, A.A.S. Curvelo, Surface chemical modification of thermoplastic starch: reactions with isocyanates, epoxy functions and stearoyl chloride, Industrial Crops and Products 21/ 2005, 331-336.
[11]. J. Thanh-Blicharz, Z. Lubiewski, Ocena w 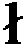 aściwości reologicznych handlowych skrobi, Żywność. Nauka. Technologia. Jakość, 76/ 2011, 53 - 65.
[12]. N. Wang, J. Yun, Preparation and characterization of thermoplastic starch/PLA blends by one-step reactive extrusion, Polym Int 56/2007 ,1440-1447.
[13]. A. A. Shah, F. Hasan, Biological degradation of plastics: a comprehensive review, Biotechnol Adv, 26/ 2008, 246-65.
[14] T.R.A. Magee, G.Neill, Effects of heat treatment on protein denaturation and starch gelatinisation in wheat flour, http://www.icef11.org/content/papers/epf/EPF493.pdf
[15] Narongrit Sombatsompo, Debets Bhattacharyya, Karen Hoi-Yan Cheung, Toughness and Compatibility Improvement of Thermoplastic Starch/Poly(lactic Acid) Blends. Advanced Materials Research 2013, 747, 67-71.
[16]. H.J. Scholten, R.L.M. Pierik, Agar as a gelling agent: differential biological effects in vitro, Scientia Horticulturae 77 /1998, 109-116.
[17]. Y.Wu, F. Geng, Effect of agar on the microstructure and performance of potato starch film, Carbohydrate Polymers 76/2009, 299-304.
[18] R. J. Mujaheddin, Jagadish, K. Sheshappa Rai, G. S Guru, Miscibility studies of Agar-Agar /Starch blends using various techniques, International Journal of Research in Pharmacy and Chemistry, 2/2012, 1049-1056.
[19] Huafeng Tian, Guozhi Xu, Biao Yang, Gaiping Guo, Microstructure and mechanical properties of soy protein/agar blend films: effect of composition and processing methods 2011, 107, 21-26.
[20] Ying Wu, Fengying Geng, Peter Chang, Jiungao Yu, Xiaofei Ma; 2009, 76, 299-304.
[21] T. D Phan, F. Debeaufort, D. Luu, A. Voilley.: Functional properties of Edible agar-based and starch-based films for food quality preservation. 2005, 53, 973-981.
[22] Praca zbiorowa, The state of world fisheris and aquaculture, Food and Agriculture Organization of the United Nations, Rome 2004
[23] J. R., Ramalingam, N., Kaliaperumal, S., Kalimuth: Agar production from Gracilaria with improved qualities, Seaweed Res. Utiln 24(1), 25-34, 2002

## Claims

1. A biodegradable thermoplastic polymer composition consisting of polylactide (PLA) and modified thermoplastic starch (mTPS) at a weight ratio mTPS to PLA of 7/1 to 1/7, respectively, wherein mTPS contains 30-80.8 wt% of native starch, 10-48.5% of glycerol as a plasticizer and additional modifying components in the form of 2-20 wt% of agar (AG) and/or 0.5-10 wt% of epoxidized vegetable oil (EOR), and/or 0.5 to 10 wt% of arabic gum (GA).

2. The composition according to claim 1, **characterized in that** it consists of polylactide (PLA) in the amount of 12.5% by weight and modified thermoplastic starch (mTPS) in the amount of 87.5% by weight, wherein mTPS contains 30-80.8 wt% of native starch, 10-48.5% of glycerol as a plasticizer and additional modifying components in the form of 2-20 wt% of agar (AG) and/or 0.5-10 wt% of epoxidized vegetable oil (EOR), and/or 0.5 to 10 wt% of arabic gum (GA).

3. The composition according to claim 1, **characterized in that** it consists of polylactide (PLA) in the amount of 87.5 % by weight and modified thermoplastic starch (mTPS) in the amount of 12.5% by weight, wherein mTPS contains 30-80.8 wt% of native starch, 10-48.5% of glycerol as a plasticizer and additional modifying components in the form of 2-20 wt% of agar (AG) and/or 0.5-10 wt% of epoxidized vegetable oil (EOR), and/or 0.5 to 10 wt% of arabic gum (GA).

4. The composition according to claim 1, **characterised in that** it consists of 12.5% by weight of polylactide (PLA) and 87.5% by weight of modified thermoplastic starch (mTPS), wherein the modified thermoplastic starch contains 73.1 wt% of native starch, 24.4 wt% of glycerol as a plasticizer and additional modifying components in the form of 0.5 wt% of epoxidized vegetable oil (EOR) and/or 2 wt% of arabic gum (GA).

5. The composition according to claim 1, **characterized in that** it consists of polylactide (PLA) and modified thermoplastic starch (mTPS) in the weight ratio of 1/2 or 1/3, respectively, where the modified thermoplastic starch contains 73.1 wt% of native starch, 24.4 wt% of glycerol as a plasticizer and additional modifying components in the form of 0.5 wt% of epoxidized vegetable oil (EOR) and 2 wt% of arabic gum (GA).

6. The composition according to claim 1, **characterized in that** it consists of polylactide (PLA) and modified thermoplastic starch (mTPS) in the weight ratio of 1/2, 1/3 or 1/4, respectively, where the modified thermoplastic starch contains 73.5 wt% of native starch, 24.5 wt% of glycerol as a plasticizer and additional modifying components in the form of 2 wt% of arabic gum (GA).

7. A method for obtaining the thermoplastic polymer composition of claim 1, **characterized in that** it consists of three steps, where:
a) in a first step, native starch is mixed at room temperature, using a mechanical mixer, with a plasticizer in the form of glycerol and an additional modifying component selected from the group consisting of agar-agar (AG), epoxidized vegetable oil (EOS), arabic gum (GA), and the resulting mixture is subjected to conditioning in closed vessels for a period of 6-24 hours;
b) in a second step, the mixture from step a) is subjected to extrusion using a single-screw or twin-screw extruder, while maintaining the head temperature in the range of 120-210°C and the temperature of the heating zones of the plasticizing unit in the range of 100°C to 210°C, with simultaneous degassing of volatile matter, and then the thermoplastic extrudate is cooled with air to room temperature and is subjected to granulation, thus obtaining a modified thermoplastic starch (mTPS) granulate with a diameter of approx. 1 mm;
c) in a third step, the granulate obtained in step b) is mixed with polylactide (PLA) granulate, wherein the weight ratio of mTPS to PLA is 7/1 to 1/7, respectively, and then the resulting mTPS/PLA mixture is subjected to extrusion using a single-screw or twin-screw extruder, while maintaining the head temperature in the range of 130-210°C, preferably 140-200°C, and the temperature of the heating zones of the plasticizing unit in the range of 100°C to 260°C, with simultaneous degassing of volatile matter, and then the thermoplastic extrudate is cooled with air to room temperature and is subjected to granulation, thus obtaining a granulate (mTPS/PLA) with a diameter of approx. 1 mm.

8. The method according to claim 7, **characterized in that** in step b), PLA granulate is introduced directly to mTPS melt in V-IV plasticizing zone of the extruder, whereby the mTPS/PLA composition according to the invention can be extruded in a continuous manner.

9. The method according to claim 7, **characterized in that** the granulate of the biodegradable thermoplastic polymer composition, obtained in step c), can be formed into various shapes depending on the needs.

## Patentansprüche

1. Bioabbaubare thermoplastische Polymerzusammensetzung bestehend aus Polyactid (PLA) sowie modifizierter thermoplastischer Stärke (mTPS) mit einem Massenverhältnis mTPS zu PLA entsprechend 7/1 bis 1/7, wobei mTPS 30%-80,8 Masse% native Stärke, 10-48,5 % Glycerol als Plastifiziermittel sowie zusätzliche Modifizierungsmittel in Form von 2-20 Masse% Agar (AG) und/oder 0,5-10 Masse% epoxidiertes Pflanzenöl (EOR) und/oder 0,5 bis 10 Masse% Gummiarabikum (GA) enthält.

2. Zusammensetzung gemäß Anspruch 1, **dadurch gekennzeichnet, dass** sie aus Polyactid (PLA) in einer Menge von 12,5 Masse% sowie modifizierter thermoplastischer Stärke (mTPS) in einer Menge von 87,5 Masse% besteht, wobei mTPS 30%-80,8 Masse% native Stärke, 10-48,5 % Glycerol als Plastifiziermittel sowie zusätzliche Modifizierungsmittel in Form von 2-20 Masse% Agar (AG) und/oder 0,5-10 Masse% epoxidiertes Pflanzenöl (EOR) und/oder 0,5 bis 10 Masse% Gummiarabikum (GA) enthält.

3. Zusammensetzung gemäß Anspruch 1, **dadurch gekennzeichnet, dass** sie aus Polyactid (PLA) in einer Menge von 87,5 Masse% sowie modifizierter thermoplastischer Stärke (mTPS) in einer Menge von 12,5 Masse% besteht, wobei mTPS 30%-80,8 Masse% native Stärke, 10-48,5 % Glycerol als Plastifiziermittel sowie zusätzliche Modifizierungsmittel in Form von 2-20 Masse% Agar (AG) und/oder 0,5-10 Masse% epoxidiertes Pflanzenöl (EOR) und/oder 0,5 bis 10 Masse% Gummiarabikum (GA) enthält.

4. Zusammensetzung gemäß Anspruch 1, **dadurch gekennzeichnet, dass** sie aus 12,5 Masse% Polyactid (PLA) sowie 87,5 Masse% modifizierte thermoplastische Stärke (mTPS) besteht, wobei modifizierte thermoplastische Stärke 73,1 Masse% native Stärke, 24,4 Masse% Glycerol als Plastifiziermittel sowie zusätzliche Modifizierungsmittel in Form von 0,5 Masse% epoxidiertes Pflanzenöl (EOR) und/oder 2 % Gummiarabikum (GA) enthält.

5. Zusammensetzung gemäß Anspruch 1, **dadurch gekennzeichnet, dass** sie aus Polyactid (PLA) sowie modifizierter thermoplastischer Stärke (mTPS) in einem Gewichtsverhältnis entsprechend 1/2 oder 1/3 besteht, wo die modifizierte thermoplastische Stärke 73,1 Masse% native Stärke, 24,4 Masse% Glycerol als Plastifiziermittel sowie zusätzliche Modifizierungsmittel in Form von 0,5 Masse% epoxidiertes Pflanzenöl (EOR) und 2 Masse% Gummiarabikum (GA) enthält.

6. Zusammensetzung gemäß Anspruch 1, **dadurch gekennzeichnet, dass** sie aus Polyactid (PLA) sowie modifizierter thermoplastischer Stärke (mTPS) in einem Gewichtsverhältnis entsprechend 1/2, 1/3 oder 1/4 besteht, wo die modifizierte thermoplastische Stärke 73,5 Masse% native Stärke, 24,5 Masse% Glycerol als Plastifiziermittel sowie zusätzliche Modifizierungsmittel in Form von 2 Masse% Gummiarabikum (GA) enthält.

7. Verfahren zum Erhalten thermoplastischer Polymerzusammensetzung gemäß Anspruch 1, **dadurch gekennzeichnet, dass** es aus drei Schritten besteht, wo:
a) im ersten Schritt native Stärke mittels eines mechanischen Mischers mit einem Plastifiziermittel in Form von Glycerol und zusätzlichem Modifizierungsmittel ausgewählt aus der Gruppe bestehend aus Agar-Agar (AG), epoxidiertem Pflanzenöl (EOS) oder Gummiarabikum (GA) in Raumtemperatur gemischt und so erhaltenes Gemisch in geschlossenen Gefäßen einer Konditionierung binnen 6-24 Stunden unterzogen wird;
b) im zweiten Schritt das Gemisch aus dem Schritt a) mittels eines Ein- oder Doppelschneckenextruders unter Einhaltung der Kopftemperatur im Bereich von 120-210°C sowie der Temperatur der Heizzonen des plastifizierenden Systems im Bereich von 100°C bis 210°C bei gleichzeitiger Entgasung von flüchtigen Teilen extrudiert und dann das thermoplastische Extrudat mit Luft auf die Raumtemperatur gekühlt und granuliert wird, wobei ein Granulat einer modifizierten thermoplastischen Stärke (mTPS) mit einem Durchmesser von ca. 1 mm erhalten wird;
c) im dritten Schritt das im Schritt b) erhaltene Granulat mit dem Polyactid-Granulat (PLA) gemischt wird, wobei das Massenverhältnis mTPS zu PLA entsprechend 7/1 bis 1/7 beträgt, und dann das erhaltene mTPS/PLA-Gemisch unter Verwendung eines Ein- oder Doppelschneckenextruders bei Einhaltung der Kopftemperatur im Bereich von 130-210°C, bevorzugt von 140-200°C, sowie der Temperatur der Heizzonen des plastifizierenden Systems im Bereich von 100°C bis 260°C, bei gleichzeitiger Entgasung von flüchtigen Teilen extrudiert und anschließend das thermoplastische Extrudat mit Luft auf die Raumtemperatur gekühlt und granuliert wird, wobei ein Granulat (mTPS/PLA) mit einem Durchmesser von ca. 1 mm erhalten wird.

8. Verfahren gemäß Anspruch 7, **dadurch gekennzeichnet, dass** das Granulat im Schritt b) in die mTPS-Schmelze in die V-IV plastifizierende Extruderzone direkt eingeführt wird, wodurch die Extrusion der erfindungsgemäßen mTPS/PLA-Zusammensetzung kontinuierlich erfolgen kann.

9. Verfahren gemäß Anspruch 7, **dadurch gekennzeichnet, dass** das Granulat der bioabbaubaren thermoplastischen, im Schritt c) erhaltenen Polymerzusammensetzung in verschiedene Formen je nach Bedarf gebracht werden kann.

## Revendications

1. Une composition de polymère thermoplastique biodégradable composée de polylactide (PLA) et d'amidon thermoplastique modifié (mTPS) dans un rapport en poids du mTPS au PLA allant respectivement de 7/1 à 1/7, où mTPS comprend 30%-80,8% en poids d'amidon natif, 10-48,5% de glycérol en tant qu'agent plastifiant et composants modifiants supplémentaires sous la forme de 2-20% en poids d'agar-agar (AG) et / ou 0,5-10% en poids de huile végétale époxydée (HVE) et / ou 0,5-10% en poids de gomme arabique (GA).

2. La composition selon la revendication 1, **caractérisée en ce qu**'elle est composée de polylactide (PLA) dans une quantité de 12,5 % en poids et d'amidon thermoplastique modifié (mTPS) dans une quantité de 87,5 % en poids, où mTPS comprend 30%-80,8% en poids d'amidon natif, 10-48,5% de glycérol en tant qu'agent plastifiant et composants modifiants supplémentaires sous la forme de 2-20% en poids d'agar-agar (AG) et / ou 0,5-10% en poids de huile végétale époxydée (HVE) et / ou 0,5-10% en poids de gomme arabique (GA).

3. La composition selon la revendication 1, **caractérisée en ce qu**'elle est composée de polylactide (PLA) dans une quantité de 87,5 % en poids et d'amidon thermoplastique modifié (mTPS) dans une quantité de 12,5% en poids, où mTPS comprend 30%-80,8% en poids d'amidon natif, 10-48,5% de glycérol en tant qu'agent plastifiant et composants modifiants supplémentaires sous la forme de 2-20% en poids d'agar-agar (AG) et / ou 0,5-10% en poids de huile végétale époxydée (HVE) et / ou 0,5-10% en poids de gomme arabique (GA).

4. La composition selon la revendication 1, **caractérisée en ce qu**'elle est composée de 12,5% en poids de polylactide (PLA) et 87,5% en poids d'amidon thermoplastique modifié (mTPS), où l'amidon thermoplastique modifié comprend 73,1% en poids d'amidon natif, 24,4% en poids de glycérol en tant qu'agent plastifiant et composants modifiants supplémentaires sous la forme de 0,5% en poids de huile végétale époxydée (HVE) et / ou 2% en poids de gomme arabique (GA).

5. La composition selon la revendication 1, **caractérisée en ce qu**'elle est composée de polylactide (PLA) et d'amidon thermoplastique modifié (mTPS) dans un rapport en poids étant respectivement 1/2 ou 1/3, où l'amidon thermoplastique modifié comprend 73,1% en poids d'amidon natif, 24,4% en poids de glycérol en tant qu'agent plastifiant et composants modifiants supplémentaires sous la forme de 0,5% en poids de huile végétale époxydée (HVE) et 2% en poids de gomme arabique (GA).

6. La composition selon la revendication 1, **caractérisée en ce qu**'elle est composée de polylactide (PLA) et d'amidon thermoplastique modifié (mTPS) dans un rapport en poids étant respectivement 1/2 , 1/3 ou 1/4, où l'amidon thermoplastique modifié comprend 73,5% en poids d'amidon natif, 24,5% en poids de glycérol en tant qu'agent plastifiant et composants modifiants supplémentaires sous la forme de 2% en poids de gomme arabique (GA).

7. Un procédé de préparation de la composition de polymère thermoplastique selon la revendication 1, **caractérisé en ce qu**'il consiste en trois étapes, où :
a) dans la première étape l'amidon natif est agité à la température ambiante, à l'aide d'un mélangeur mécanique avec un plastifiant sous la forme de glycérol et un composant supplémentaire modifiant choisi dans le groupe constitué par l'agar-agar (AG), l'huile végétale époxydée (HVE) ou la gomme arabique (GA) et le mélange ainsi obtenu est conditionné dans des récipients fermés pendant une période de 6-24 heures ;
b) dans la deuxième étape le mélange de l'étape a) est soumis à l'extrusion par une extrudeuse à vis unique ou à double vis, en maintenant la température de la tête dans la gamme de 120-210°C et la température des zones de chauffage de l'unité de plastification dans la gamme de 100°C à 210°C, tout en dégazant les matières volatiles, et ensuite l'extrudat thermoplastique est refroidi par air jusqu'à la température ambiante et est granulé pour obtenir des granulés de l'amidon thermoplastique modifié (mTPS) avec un diamètre d'environ 1 mm ;
c) dans la troisième étape les granulés de l'étape b) sont mélangés avec les granulés de polylactide (PLA), où le rapport en poids du mTPS au PLA est respectivement de 7/1 à 1/7, et ensuite le mélange mTPS/PLA ainsi obtenu est soumis à l'extrusion par une extrudeuse à vis unique ou à double vis, en maintenant la température de la tête dans la gamme de 130-210°C, de préférence 140-200°C et la température des zones de chauffage de l'unité de plastification dans la gamme de 100°C à 260°C, tout en dégazant les matières volatiles, et ensuite l'extrudat thermoplastique est refroidi par air jusqu'à la température ambiante et est granulé pour obtenir des granulés (mTPS/PLA) avec un diamètre d'environ 1 mm.

8. Le procédé selon la revendication 7, **caractérisé en ce qu**'à l'étape b) les granulés de PLA sont introduits directement à la masse fondue de mTPS dans la zone de plastification V-IV de l'extrudeuse, grâce à quoi l'extrusion de la composition de mTPS/PLA de l'invention peut être réalisée en continu.

9. Le procédé selon la revendication 7, **caractérisé en ce que** les granulés de la composition de polymère thermoplastique biodégradable obtenus à l'étape c) peuvent être formés en différentes formes selon les besoins.
